## Europäisches Patentamt
## European Patent Office
## Office européen des brevets

(19)

(11) Veröffentlichungsnummer : **0 127 163**
**B1**

(12)

# EUROPÄISCHE PATENTSCHRIFT

(45) Veröffentlichungstag der Patentschrift :
12.11.86

(21) Anmeldenummer : 84106007.2

(22) Anmeldetag : 25.05.84

(51) Int. Cl.⁴ : **H 02 M   3/28**

(54) Fehlererkennungsschaltung für parallel auf einen Verbraucher speisende Stromversorgungsgeräte.

(30) Priorität : 27.05.83 DE 3319306

(43) Veröffentlichungstag der Anmeldung :
05.12.84 Patentblatt 84/49

(45) Bekanntmachung des Hinweises auf die Patenterteilung : 12.11.86 Patentblatt 86/46

(84) Benannte Vertragsstaaten :
AT BE CH DE FR GB IT LI NL

(56) Entgegenhaltungen :
NL-A- 8 104 341
US-A- 4 074 182

(73) Patentinhaber : Siemens Aktiengesellschaft Berlin und München
Wittelsbacherplatz 2
D-8000 München 2 (DE)

(72) Erfinder : Schlenk, Manfred, Dipl. Ing.
Ostpreussenstrasse 14
D-8903 Bobingen (DE)
Erfinder : Chadwick, P.N.R. Dipl.Phys.
Kirchweg 10
D-8911 Petzenhausen (DE)

## Beschreibung

Die Erfindung betrifft eine Fehlererkennungsschaltung für mindestens zwei ausgangsseitig parallel auf einen Verbraucher speisende Schaltnetzteile mit einem Schalttransistor, einem Leistungsübertrager und einem Gleichrichterteil mit nachgeschaltetem Siebglied.

Der Trend zu höheren Leistungsdichten und die Forderung nach hoher Verfügbarkeit von Datenverarbeitungsanlagen führt zwangsläufig dazu, mehrere Stromversorgungen parallel schalten zu müssen. Dabei entscheidet die Relation Kosten zu Verfügbarkeit, ob ein System von parallelgeschalteten Stromversorgungen redundant ausgelegt wird. Da hohe Verfügbarkeit eines Systems gleichzeitig kurze Reparaturzeiten bedeutet, ist es u. a. von entscheidender Bedeutung, daß nach Ausfall einer der parallelgeschalteten Stromversorgungen die defekte Stromversorgung sofort erkannt werden kann.

Aufgabe der Erfindung ist es, eine Fehlererkennungsschaltung für ausgangsseitig parallelgeschaltete auf einen Verbraucher speisende Schaltnetzteile zu schaffen, die eine eindeutige und rasche Erfassung fehlerhafter Schaltnetzteile ermöglicht.

Zur Lösung dieser Aufgabe wird gemäß der Erfindung die Fehlererkennungsschaltung derart ausgebildet, daß jeweils zwischen Schalttransistor und Leistungsübertrager ein Stromwandler liegt, dessen Bürdenspannung ersten Gleichrichtern und der Wechselspannungsanteil der nicht gesiebten Gleichspannung am Gleichrichterteil über einen Hochpaß zweiten Gleichrichtern zugeführt sind, daß die Ausgänge der Gleichrichter an die nichtinvertierenden Eingänge von ersten und zweiten Komparatoren geführt sind, daß der nichtinvertierende Eingang der ersten Komparatoren mit einer ersten Vergleichsspannung beaufschlagt ist, die größer ist als die Meßspannung, die durch den Magnetisierungsstrom des Leistungsübertragers entsteht und daß der nichtinvertierende Eingang der zweiten Komparatoren mit einer zweiten Vergleichsspannung beaufschlagt ist, der kleiner ist als der Wechselspannungsanteil der nicht gesiebten Gleichspannung, die sich bei minimal zulässiger Netzeingangsspannung des Geräts einstellt, daß die Ausgänge der ersten und zweiten Komparatoren jeweils mit dem Eingang einer Auswerteschaltung verbunden sind, daß die Ausgänge aller Auswerteschaltungen an eine externe, z. B. in einer Datenverarbeitungsanlage befindlichen Stromversorgungssteuereinrichtung geführt sind, die ihrerseits auf die jeweiligen Steuer- und Regeleinheiten der Schalttransistoren einwirken.

Weiterhin kann dem ersten Gleichrichter ein Hochpaß vorgeschaltet sein, der so dimensioniert ist, daß die Signalform des Wechselstromanteils der ungesiebten Gleichspannung unverzerrt bleibt.

Die Gleichrichter können dabei vorteilhafterweise Spitzengleichrichter sein.

Durch diese Maßnahmen wird die Überwachung des betriebsbereiten Zustands eines Schaltnetzteils ermöglicht, ohne daß bei zusammengeschaltetem Stromversorgungsgerät Justagen an den einzelnen Geräten notwendig sind. Um zu verhindern, daß durch die Ausgangsweilligkeit des Meßgleichrichters eine Fehlabgabe von Signalen entsteht, können die Komparatoren so beschaltet sein, daß sie eine Hysterese besitzen.

Die Vergleichsspannung für die beiden Komparatoren kann zweckmäßigerweise über Spannungsteiler aus der stabilisierten Versorgungsspannung erzeugt werden.

Die Auswerteschaltung kann dabei aus einem NOR-Gatter bestehen, dessen Ausgang über einen Ohmschen Widerstand mit einem Optokoppler verbunden ist. Dadurch kann gleichzeitig auf einfache Weise die Eigenversorgung der Stromversorgung mit überwacht werden.

In weiterer Ausgestaltung der Erfindung ist es vorteilhaft, die Fehlererkennungsschaltung derart auszubilden, daß die zentrale Stromversorgungssteuereinrichtung eine zentrale Fehlerausweteschaltung aufweist, die entsprechend der Anzahl der parallel geschalteten Schaltnetzteile UND-Gatter enthält, deren erster Eingang mit den jeweiligen Ausgängen der Auswerteschaltung gekoppelt sind, deren zweite Eingänge miteinander und mit dem Ausgang eines weiteren UND-Gatters verbunden sind und deren dritten Eingang ein Verriegelungssignal zuführbar ist, daß die Ausgänge der UND-Gatter mit den Setzeingängen nachgeschalteter RS-Flipflops und deren Rücksetzeingänge untereinander verbunden sind, und daß die Ausgänge der RS-Flipflops mit den Eingängen des weiteren UND-Gatters als auch mit einer Anzeige verbunden sind.

Anhand der Ausführungsbeispiele nach den Figuren 1, 2, 3 und 5 sowie eines Ablaufdiagramms nach der Fig. 4 wird die Erfindung näher erläutert.

Es zeigen :

Figur 1 ein Blockschaltbild der Fehlererkennungsschaltung,

Figur 2 ein Detailschaltbild der ersten und zweiten Gleichrichter der Komparatoren und der Auswerteschaltung,

Figur 3 unterschiedliche Auskopplungsmöglichkeiten des Wechselspannungsanteils der nicht gesiebten Gleichspannung,

Figur 4 ein Flußdiagramm,

Figur 5 ein Schaltbild der Fehlerausweteschaltung.

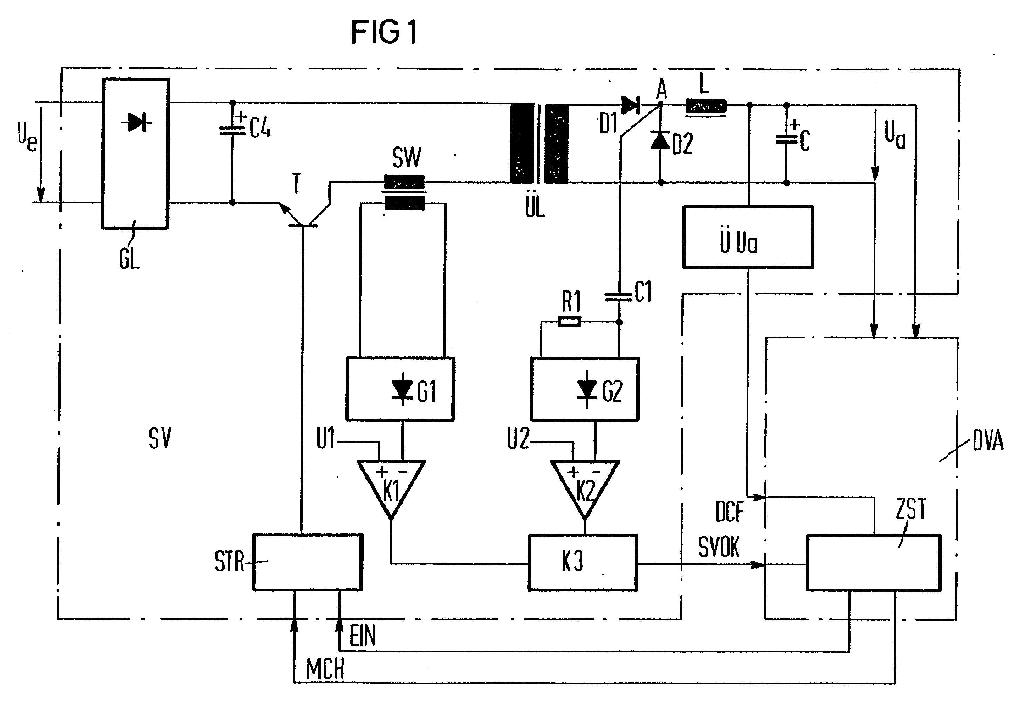

Fig. 1 zeigt die Fehlererkennungsschaltung anhand eines als Schaltnetzeils ausgebildeten Stromversorgungsgeräts.

Über den Netzgleichrichter GL wird die Netzspannung UE dem Schaltregler, bestehend aus dem Schalttransistor T dem Leistungsübertrager ÜL, dem Gleichrichterteil D1, D2 und dem Siebglied LC zugeführt. Dem Netzgleichrichter GL ist zur Siebung ein Kondensator C4 nachgeschaltet.

Zwischen dem Schalttransistor T und dem Leistungsübertrager ÜL ist der Stromwandler SW geschaltet, dessen Bürdenspannung dem ersten Meßgleichrichter G1 zugeführt ist, dessen Ausgang mit dem invertierenden Eingang des ersten Komparators K1 verbunden ist. Am nichtinvertierenden Eingang dieses Komparators liegt die erste Vergleichsspannung U1 an. Am Punkt A des Gleichrichterteils des Schaltnetzteils wird die Wechselspannungskomponente der nicht gesiebten Gleichspannung über den Hochpaß C1, R1 abgegriffen, und dem zweiten Meßgleichrichter G2 zugeführt, dessen Ausgang an den invertierender. Eingang des zweiten Komparators K2 geführt ist, dessen nichtinvertierender Eingang ebenfalls mit einer zweiten Vergleichsspannung U2 beaufschlagt ist. Ausgangsseitig sind die beiden Komparatoren K1, K2 mit einer Auswerteschaltung K3 verbunden, deren Ausgang an die externe in einer Datenverarbeitungsanlage befindlichen zentralen Stromversorgungssteuereinrichtung ZST geführt ist. Die zentrale Stromversorgungssteuereinrichtung ZST wirkt ihrerseits auf die Steuerungs- und Regelungseinrichtung für den Schalttransistor T ein, wie nachstehend noch näher erläutert wird.

Mit dem zweiten Gleichrichter G2 wird die Wechselspannung an Punkt A erfaßt und mit der zweiten Vergleichsspannung U2 verglichen. Bei der Wahl der zweiten Vergleichsspannung U2 ist zu beachten, daß sie kleiner als die Wechselspannung an Punkt A gewählt wird, die sich bei minimal zulässiger Netzeingangsspannung des Geräts einstellt. Baut sich am invertierenden Eingang des zweiten Komparators K2 eine Spannung auf, die größer als die zweite Vergleichsspannung U2 ist, so liegt weder primär noch sekundär ein Kurzschluß im Schaltnetzteil vor, die Diode D1 hat keine Unterbrechung.

Der Fall, daß irgendwo im Sekundärkreis eine Unterbrechung vorliegt (Drossel L, Zuführungen zu den Ausgangsklemmen), wird durch Messung des primären Leistungsflusses erfaßt. Dazu wird der Primärstrom des Schaltnetzteils mittels eines Stromwandlers SW gemessen und anschließend mit Hilfe eines ersten Gleichrichters G1 gleichgerichtet.

Wird die erste Vergleichsspannung U1 so gewählt, daß sie größer als die Meßspannung ist, die durch den Magnetisierungsstrom des Leistungsübertragers entsteht, so baut sich, falls ein Leistungsfluß zum Verbraucher erfolgt, am invertierenden Eingang des ersten Komparators K1 eine Meßspannung auf, die größer als die erste Vergleichsspannung U1 ist.

Mit der Auswerteschaltung K3 werden beide Kriterien verknüpft und der Datenverarbeitungsanlage die Betriebsbereitschaft der Stromversorgung (SVOK) signalisiert.

Wenn das Stromversorgungssystem redundant ausgelegt ist, liefert bekanntlich — sofern keine Maßnahmen zu einer gleichmäßigen Lastaufteilung getroffen werden — das Stromversorgungsgerät mit dem niedrigsten Spannungssollwert keinen Beitrag zum Gesamtstrom des Systems.

Daher wird sich das redundante Gerät als defekt melden. Um zu überprüfen, ob ein Gerät defekt bzw. redundant ist, muß jedes Stromversorgungsgerät des Gesamtsystems in bestimmten Zeitabständen zur Stromübernahme gezwungen werden. Dies geschieht sinnvollerweise derart, daß der Sollwert der einzelnen Stromversorgungen mittels eines Marginal-Check-Befehls MCH kurzzeitig erhöht wird.

Bei einem nicht redundanten Stromversorgungssystem führt der Ausfall eines Stromversorgungsgerätes zum Gesamtausfall der Datenverarbeitungsanlage. Die Erfassung des Geräts, das den Systemausfall herbeigeführt hat, kann auf zweierlei Weise erfolgen:
1) Die erste Fehlermeldung wird gespeichert und zur Anzeige gebracht.
2) Nach dem Ausfall der Datenverarbeitungsanlage wird jedes Stromversorgungsgerät nochmals eingeschaltet. Das defekte Gerät wird sich mit $\overline{SVOK}$ melden. Dies wird wiederum abgespeichert und zur Anzeige gebracht.

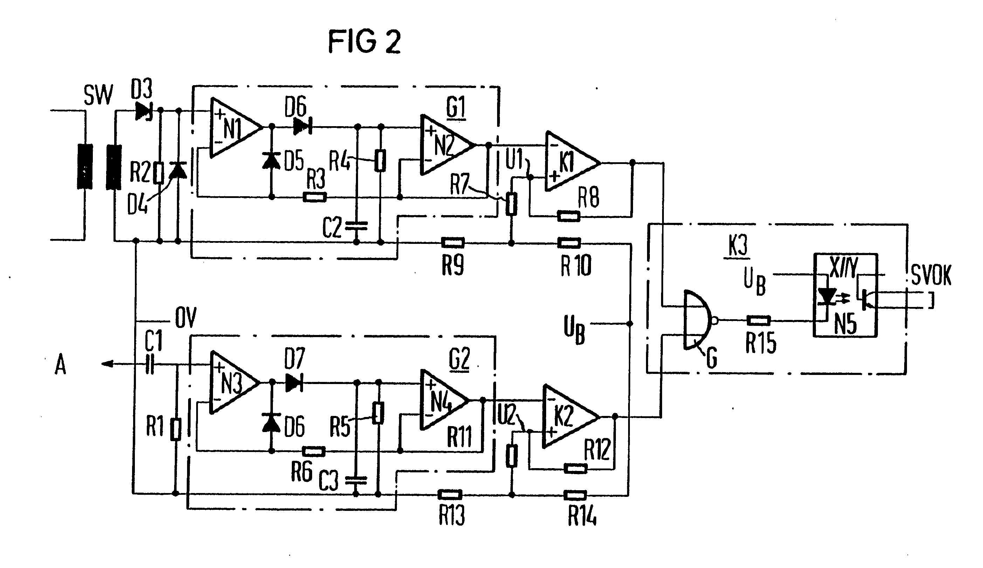

Fig. 2 zeigt ein Ausführungsbeispiel der erfindungsgemäßen Schaltung. Um nur den Wechselspannungsanteil an Punkt A zu messen, wird der zweite Gleichrichter G2 kapazitiv angekoppelt. Der Hochpaß R1, C1 wird so gewählt, daß die Signalform der Wechselspannung unverzerrt übertragen wird. Die kapazitive Kopplung an Punkt A hat gleichzeitig den Vorteil, daß, unabhängig davon, ob die Drossel L im positiven oder negativen Strompfad bzw. in beiden liegt, immer dieselbe Meßschaltung verwendet werden kann.

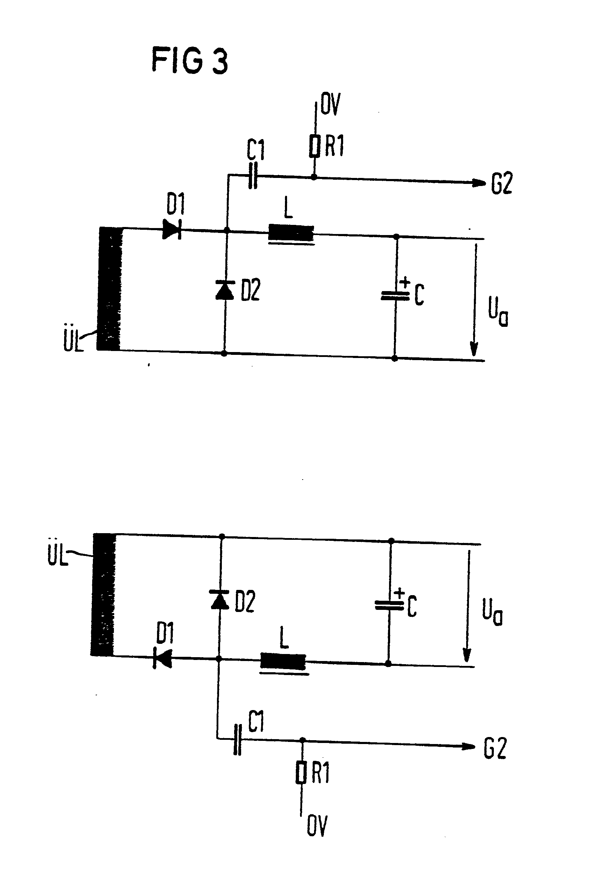

Fig. 3 zeigt dies. Als zweiter Gleichrichter G2 findet ein Präzizisionsspitzenwertgleichrichter Verwendung, wie er dem bekannten Stand der Technik entspricht. Um eine Fehlabgabe des Signals SVOK durch die Ausgangswelligkeit des Meßgleichrichters zu verhindern, besitzt der zweite Komparator K2 eine Hysterese, die mittels der Widerstände R12 und R11 gebildet wird. Die zweite Vergleichsspannung U2 wird über den Spannungsteiler R14, R13 aus der stabilisierten Versorgungsspannung $U_B$ gewonnen. Da die Ausgangsspannung des zweiten Gleichrichters G2 am invertierenden Eingang des zweiten Komparators K2 liegt, nimmt der Ausgang des zweiten Komparators K2 L-Pegel an, wenn sich eine Wechselspannung an Punkt A aufbaut.

Die Z-Diode D3, die Diode D4 und der Bürdenwiderstand R2 stellen die Stromwandlerbeschaltung dar, wie sie dem bekannten Stand der Technik entspricht. Gleichrichter G1 ist wiederum als Spitzenwertgleichrichter ausgeführt. Die Hysterese des ersten Komparators K1 wird mittels der Widerstände R7 und R8 gebildet, die Vergleichsspannung U1 wird mittels des Spannungsteilers R9, R10 aus der stabilisierten Versorgungsspannung $U_B$ gewonnen. Liegt der Primärstrom des Schaltnetzteiles über dem Magnetisierungsstrom, so nimmt der Ausgang des ersten Komparators K1 ebenfalls L-Pegel an.

Die Ausgänge der beiden Komparatoren K1 und K2 werden mit dem NOR-Gatter G verknüpft. Liegt kein Fehler im Schaltnetzteil vor, so nimmt der Ausgang des NOR-Gatters G L-Pegel an, über den Widerstand R15 fließt Strom in der Lichtemissionsdiode LED des Optokopplers N5, der Phototransistor des Optokopplers N5 wird durchgeschaltet. Neben den bekannten Vorteilen eines Optokopplers — Verringerung von Common-mode-Störungen, potentialfreie Signalübertragung — kann gleichzeitig auf einfache Weise die Eigenversorgung ($U_B$) der Stromversorgung mitüberwacht werden.

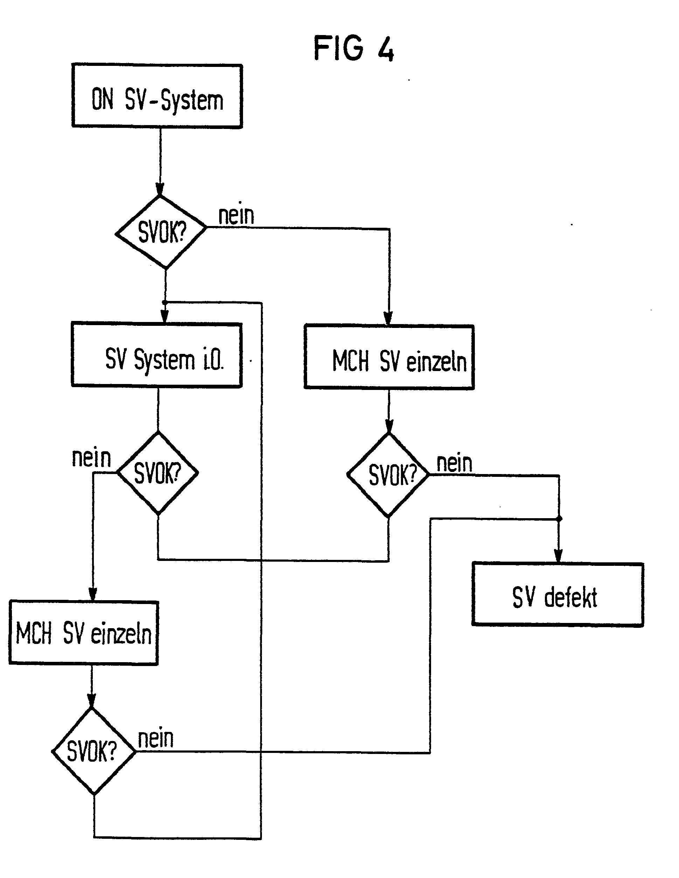

Fig. 4 zeigt eine mögliche Prüfroutine bei einem Stromversorgungssystem mit redundanten Schaltnetzteilen, die von der zentralen Stromversorgungssteuerung (ZST) ausgeführt wird. Nach dem Einschaltbefehl (ON) für das gesamte Stromversorgungssystem werden die Signale SVOK der einzelnen Schaltnetzteile abgefragt. Da das redundante Gerät Fehler melden wird, erhöht die zentrale Stromversorgungssteuerung ZST den Sollwert MCH dieses Geräts Erscheint nun auch bei diesem Gerät das Signal SVOK, so ist das Gesamtsystem zu diesem Zeitpunkt in Ordnung. Nach diesem Initialtest des Stromversorgungssystems wird in regelmäßigen Zeitabständen der Spannungssollwert jedes einzelnen Geräts erhöht, da durch dynamische Vorgänge in der Datenverarbeitungsanlage nicht immer derselbe Schaltregel redundant arbeiten muß. Ein defektes Gerät wird zur Anzeige gebracht.

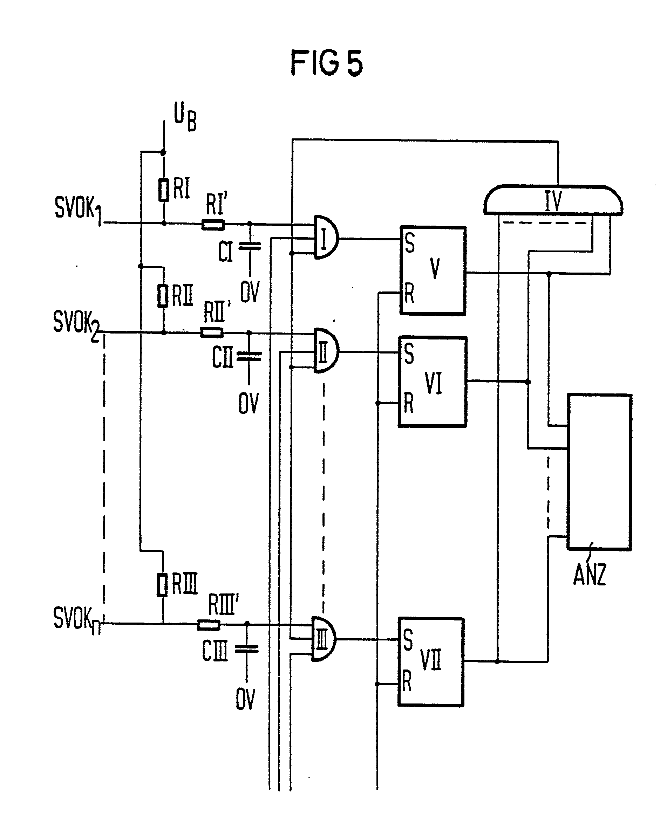

Fig. 5 zeigt eine mögliche schaltungstechnische Ausführung der Fehlerauswertung nach Fig. 4. Melden sämtliche Schaltnetzteile SVOK, so nehmen die Ausgänge der UND-Gatter I, II, III L-Pegel an, die Ausgänge der RS-Flipflops V, VI, VII H-Pegel und damit auch der Ausgang des UND-Gatters IV. Mit einem L-Pegel an den Verriegelungseingängen der UND-Gatter I, II, III kann die Meldung $\overline{\text{SVOK}}$ eines redundanten Stromversorgungsgeräts unterdrückt werden. Während des MCH-Betriebs wird die Unterdrückung wieder aufgehoben. Tritt während eines MCH-Zyklus eine Fehlermeldung auf, so nimmt den Ausgang des zugehörigen RS-Flipflops L-Pegel an Dies wird angezeigt und über Gatter IV eine weitere Fehlererfassung unterbunden.

Die Auswerteschaltung nach Fig. 5 läßt sich für ein nicht redundantes Stromversorgungssystem dann verwenden, wenn die Verriegelungseingänge auf H-Pegel gelegt werden. Die Auswerteschaltung erfaßt dann das Gerät, das den Systemausfall hervorgerufen hat.

## Patentansprüche

1. Fehlererkennungsschaltung für mindestens zwei ausgangsseitig parallel auf einen Verbraucher speisende Schaltnetzteile mit mindestens einem elektronischen Schalter, einem Leistungsübertrager (ÜL) und einem Gleichrichterteil (D1, D2) mit nachgeschaltetem Siebglied (4C), dadurch gekennzeichnet, daß jeweils zwischen elektronischem Schalter (T) und Leistungsübertrager (ÜL) ein Stromwandler (SW) liegt, dessen Bürdenspannung ersten Gleichrichtern (G1) und der Wechselspannungsanteil der nicht gesiebten Gleichspannung am Gleichrichterteil (D1, D2) über einen Hochpaß (C1, R1) zweiten Gleichrichtern (G2) zugeführt sind, daß die Ausgänge der Gleichrichter an die einen Eingänge von ersten und zweiten Komparatoren (K1, K2) geführt sind, daß der andere Eingang der ersten Komparatoren (K1) mit einer ersten Vergleichsspannung (U1) beaufschlagt ist, die größer ist als die Meßspannung, die durch den Magnetisierungsstrom des Leistungssbertragers (ÜL) entsteht und daß der andere Eingang der zweiten Komparatoren (K2) mit einer zweiten Vergleichsspannung (U2) beaufschlagt ist, die kleiner ist als der Wechselspannungsanteil der nicht gesiebten Gleichspannung, die sich bei minimal zulässiger Netzeingangsspannung des Geräts einstellt, daß die Ausgänge der ersten und zweiten Komparatoren (K1, K2) jeweils mit den Eingängen einer Auswerteschaltung (K3) verbunden sind, daß die Ausgänge aller Auswerteschaltungen (K3) an eine externe, z. B. in einer Datenverarbeitungsanlage befindlichen Stromversorgungssteuereinrichtung (ZST) geführt sind, die ihrerseits auf die jeweiligen Steuer- und Regeleinheiten (STR) der Schalttransistoren (T) einwirken.

2. Fehlererkennungsschaltung nach Anspruch 1, dadurch gekennzeichnet, daß der dem zweiten Gleichrichter (G2) vorgeschaltete Hochpaß (C1, R1) so dimensioniert ist, daß die Signalform des Wechselstromanteils der ungesiebten Gleichspannung unversehrt bleibt.

3. Fehlererkennungsschaltung nach einem der vorhergehenden Ansprüche, dadurch gekennzeichnet, daß die ersten und zweiten Gleichrichter (G1, G2) Spitzenwertgleichrichter sind.

4. Fehlererkennungsschaltung nach einem der vorhergehenden Ansprüche, dadurch gekennzeichnet, daß die ersten und zweiten Komparatoren (K1, K2) so geschaltet sind, daß die eine Hysterese besitzen.

5. Fehlererkennungsschaltung nach einem der vorhergehenden Ansprüche, dadurch gekennzeichnet, daß die ersten und zweiten Vergleichsspannungen (U1, U2) über Spannungsteiler (R9, R10 ; R13, R14) aus der stabilisierten Versorgungsspannung ($U_B$) erzeugt sind.

6. Fehlererkennungsschaltung nach einem der vorhergehenden Ansprüche, daduch gekennzeichnet, daß die Auswerteschaltung (K3) aus einem NOR-Gatter (G) besteht, dessen Ausgang über einen Ohmschen Widersand (R15) mit einem Optokoppler (N5) verbunden ist.

7. Fehlererkennungsschaltung nach einem der vorhergehenden Ansprüche, dadurch gekennzeichnet, daß die zentrale Stromversorgungssteuereinrichtung (ZST) eine zentrale Fehlerauswerteschaltung aufweist, die entsprechend der Anzahl der parallel geschalteten Schaltnetzteile UND-Gatter (I, II, III) enthält, deren erster Eingang mit den jeweiligen Ausgängen der Auswerteschaltung (K3) gekoppelt sind, deren zweite Eingänge miteinander und mit dem Ausgang eines weiteren UND-Gatters (IV) verbunden sind und deren dritten Eingänge (E1, E2, E3) ein Verriegelungssignal zuführbar ist, daß die Ausgänge der UND-Gatter (I, II, III) mit den Setzeingängen nachgeschalteter RS-Flipflops (V, VI, VII) und deren Rücksetzeingänge (R) untereinander verbunden sind, und daß die Ausgänge der RS-Flipflops (V, VI, VII) mit den Eingängen des weiteren UND-Gatters (IV) als auch mit einer Anzeige (ANZ) verbunden sind.

## Claims

1. A fault recognition circuit for at least two switch-mode power supply units whose outputs feed a parallel load, with at least one electronic switch, a power transformer (ÜL) and a rectifier component (D1, D2) followed by a filter component (L, C), characterised in that in each case a current converter (SW) is arranged between the electronic switch (T) and the power transformer (ÜL), the load voltage of which is fed to a first rectifier circuit (G1), and where the a. c. voltage component of the non-filtered d. c. voltage connected to the rectifier component (D1, D2) is fed via a high-pass filter (C1, R1) to a second rectifier circuit (G2), that the outputs of the rectifiers lead to the first inputs of first and second comparators (K1, K2), that the other input of the first comparators (K1) is acted upon by a first comparator voltage (U1) greater than the measuring voltage produced by the magnetisation current of the power transformer (ÜL), and that the other input of the second comparator (K2) is acted upon by a second comparator voltage (U2) smaller than the a. c. voltage component of the non-filtered d. c. voltage which occurs with the minimum permissable mains input voltage of the device, that the outputs of the first and second comparators (K1, K2) are each connected to the inputs of an analysis circuit (K3), that the outputs of all the analysis circuits (K3) lead to an external current supply control device (ZST) located, for example, in a data processing system, and which itself influences the control and regulating units (STR) of the switching transistors (T).

2. A fault recognition circuit as claimed in Claim 1, characterised in that the high-pass filter (C1, R1) connected in series with the second rectifier (G2) is such that the signal shape of the a. c. component of the non-filtered d. c. voltage remains unimpaired.

3. A fault recognition circuit as claimed in one of the preceding Claims, characterised in that the first and second rectifiers (G1, G2) are peak value rectifiers.

4. A fault recognition circuit as claimed in one of the preceding Claims, characterised in that the first and second comparators (K1, K2) are connected such that they exhibit hysteresis.

5. A fault recognition circuit as claimed in one of the preceding Claims, characterised in that the first and second comparator voltages (U1, U2) are generated from the stabilised supply voltage (U_B) via voltage dividers (R9, R10 ; R13, R14).

6. A fault recognition circuit as claimed in one of the preceding Claims, characterised in that the analysis circuit (K3) consists of a NOR-gate (G) whose output is connected via a resistor (R15) to an opto-coupler (N5).

7. A fault recognition circuit as claimed in one of the preceding Claims, characterised in that the central current supply control device (ZST) has a central fault analysis circuit which contains AND-gates (I, II, III) which correspond in number to the number of parallel connected switch-mode power supply units, and whose first inputs are coupled to the corresponding outputs of the analysis circuit (K3), whose second inputs are connected to one another and to the output of a further AND-gate (IV), and whose third inputs (E1, E2, E3) can be supplied with a locking signal, that the outputs of the AND-gates (I, II, III) are connected to the set inputs of subsequently connected RS flip-flops (V, VI, VII) whose reset inputs (R) are connected to one another, and that the outputs of the RS flip-flops (V, VI, VII) are connected to the inputs of the further AND-gate (IV) and to a display unit (ANZ).

## Revendications

1. Circuit de détection d'erreurs pour au moins deux blocs d'alimentation commutables alimentant, côté sortie, et en parallèle, une charge, avec au moins un commutateur électronique, un transformateur de puissance (ÜL) et un dispositif redresseur (D1, D2) avec un filtre aval, caractérisé par le fait qu'entre chaque commutateur électronique (T) et le transformateur de puissance (ÜL) est situé un transformateur de courant (SW) dont la tension de charge est appliquée à des premiers redresseurs (G1), alors que la composante de tension alternative de la tension continue non filtrée, au niveau du dispositif redresseur (D1, D2), est appliquée, par l'intermédiaire d'un passe-haut (T1, R1), à des seconds redresseurs (G2), que les sorties des redresseurs sont reliées avec des premières entrées d'un premier et d'un second comparateurs (K1, K2), que la seconde entrée du premier comparateur (K1) est chargée par une première tension de comparaison (U1) qui est plus grande que la tension de mesure qui résulte du courant d'aimantation du transformateur de puissance (ÜL), et que la seconde entrée du second comparateur (K2) est chargée avec une seconde tension de comparaison (U2) qui est plus petite que la composante de tension alternative de la tension continue non filtrée qui se règle pour la tension d'entrée, minimale admissible du réseau, que les sorties du premier et du second comparateurs (K1, K2) sont respectivement reliées avec les entrées d'un circuit d'évaluation (K3), que les sorties de tous les circuits d'évaluation (K3) sont reliés à un dispositif externe de commande du courant d'alimentation (ZST), qui se trouve, par exemple, dans une installation pour le traitement de données, et qui, à leur tour, agissent sur les unités respectives de commande et de réglage (STR) des transistors de commutation (T).

2. Circuit de détection d'erreurs selon la revendication 1, caractérisé par le fait que le passe-haut (C1, R1) qui est monté en amont du second redresseur (G2), est dimensionné de telle façon que la forme des signaux de la composante de courant alternatif de la tension continue non filtrée, reste intacte.

3. Circuit de détection d'erreurs selon l'une des revendications précédentes, caractérisé par le fait que les premiers et les seconds redresseurs (G1, G2) sont des redresseurs de valeurs de pointe.

4. Circuit de détection d'erreurs selon l'une des revendications précédentes, caractérisé par le fait que les premiers et les seconds comparateurs (K1, K2) sont montés de telle façon qu'ils possèdent une hystérèse.

5. Circuit de détection d'erreurs selon l'une des revendications précédentes, caractérisé par le fait que les premières et les secondes tensions de comparaison (U1, U2) sont produites à l'aide de diviseurs de tension (R9, R10 ; R13, R14), à partir de la tension d'alimentation stabilisée ($U_B$).

6. Circuit de détection d'erreurs selon l'une des revendications précédentes, caractérisé par le fait que le circuit d'évaluation (K3) est constitué par un circuit NON-OU (G), dont la sortie est reliée, par l'intermédiaire d'une résistance ohmique (R15), à un optocoupleur (N5).

7. Circuit de détection d'erreurs selon l'une des revendications précédentes, caractérisé par le fait que le dispositif central de la commande de l'alimentation en courant (ZST) comporte un circuit central pour l'évaluation des erreurs, qui comporte, de façon correspondant au nombre de blocs d'alimentation combustible montés en parallèle, des circuits ET (I, II, III) dont la première entrée est accouplée aux sorties respectives des sorties d'évaluation (K3), dont les secondes entrées sont reliées entre elles et à la sortie d'un second circuit ET (IV) et dont les troisièmes entrées (E1, E2, E3) peuvent recevoir un signal de verrouillage, que les sorties des circuits ET (I, II, III) sont reliées avec les entrées d'autorisation de multivibrateurs bistables RS (V, VI, VII) montés en aval, et dont les entrées de remise à l'état initial (R) sont reliées entre elles, et que les sorties des multivibrateurs bistables RS (V, VI, VII) sont reliées aux entrées des seconds circuits ET (IV) ainsi qu'à un dispositif d'affichage (ANZ).

FIG 2

# FIG 3

FIG 4

# FIG 5